# EUROPEAN PATENT APPLICATION

(11) **EP 4 400 023 A1**
(43) Date of publication of application: **17.07.2024**
(21) Application number: 23151166.8
(22) Date of filing: 11.01.2023
(51) Int. Cl.: A47L 13/16, B32B 5/00, D04H 13/00, D04H 1/492, B32B 5/26, B32B 5/02, B32B 7/08

(54) **CLEANING CLOTH**

(71) Applicant: Carl Freudenberg KG, 69469 Weinheim (DE); Berry Global, Inc., Evansville, Indiana 47710 (US)
(72) Inventor: WINTERLING, Friedel, 68161 Mannheim (DE); POTS, Dionne, 5241JW Rosmalen (NL); MALOCHO, Miriam, 41063 Mönchengladbach (DE)
(74) Representative: Reiser & Partner Patentanwälte mbB

(57) **Abstract**

A cleaning cloth (10) comprising at least two substrates (1, 2), wherein a first substrate (1) comprises staple fibres and a second substrate (2) comprises spunmelt fibres, wherein the first substrate (1) contains biodegradable fibres, wherein the second substrate (2) contains biodegradable fibres.

## Description

The invention relates to a cleaning cloth comprising at least two substrates, wherein a first substrate comprises staple fibres and a second substrate comprises spunmelt fibres, wherein the substrates contain biodegradable fibres.

Such a cleaning cloth is known, for example, from WO 03/004748 A1. Such cleaning cloths are often used with dust wiping devices. The cleaning cloth consists of at least two nonwoven substrates, wherein one substrate comprises staple fibres and another substrate comprises spunmelt fibres.

Staple fibres are formed from textile fibres of finite length. Staple fibres can be used to produce voluminous sheet material which has an excellent dust pick-up capacity. However, sheet materials made of staple fibres have relatively poor mechanical properties. For the production of a voluminous and dimensionally stable cleaning cloth using staple fibres, it is therefore known to provide a substrate of continuous fibres in the form of a spunbond substrate. Due to the manufacturing process, it is necessary to make the spunbond substrate of fusible material. Accordingly, in the cleaning cloths known from the prior art, at least the second substrate is made of synthetic materials, wherein polypropylene is used in most cases. However, there is the problem that such cleaning cloths are not biodegradable, so that the cleaning cloths can usually only be processed thermally after use.

The object of the invention is to provide a nonwoven-based cleaning cloth which has improved environmental compatibility while maintaining performance.

This object is achieved by the features of claim 1. The dependent claims make reference to advantageous embodiments.

The cleaning cloth according to the invention comprises at least two substrates, wherein a first substrate comprises staple fibres and a second substrate comprises spunmelt fibres, wherein the first substrate contains biodegradable fibres and wherein the second substrate contains biodegradable fibres. Spunmelt fibres in the sense of the invention are both endless and finite fibres made from melt.

The use of biodegradable fibres for both substrates, i. e., also for the substrate comprising spunmelt fibres, results in a cleaning cloth which is biodegradable as a whole. Accordingly, it is possible to make the cleaning cloth biodegradable. In this context, biodegradability is understood to mean, in particular, technical compostability on an industrial scale and under industrial conditions.

Preferably, the first substrate is mechanically bonded. For mechanical bonding, hydroentanglement and needle bonding are particularly suitable. Mechanical bonding stabilises the staple fibres of the first substrate. In this case, the mechanical bonding is preferably performed in such a way that the first substrate and the second substrate are bonded together by the bonding process. In particular, mechanical bonding by means of hydroentanglement can be considered for this purpose. As a result, the two substrates are firmly connected to each other.

To produce a cleaning cloth, the second substrate comprising spunmelt fibres is provided first. Preferably, the second substrate is already thermally bonded and thus has a high stability. Staple fibres are placed on the second substrate and bonded by water jets. Due to the hydroentanglement, the first substrate is firmly bonded to the second substrate and a voluminous cleaning cloth with excellent cleaning properties is created.

The second substrate preferably contains fusible and biodegradable fibres. In particular, these can be made from polylactic acid (PLA) or blends thereof. In addition, spunmelt polymers based on starch, cellulose ester or cellulose acetate can be considered. Furthermore, it is conceivable to form the spunmelt polymers from polybutylene succinate (PBS) polybutylene succinate adipate (PBSA), polyhydroxyalkanoate (PHA), polybutylene adipate terephthalate (PBAT) or biodegradable polyester (PE) or a biodegradable copolyester. All of the above materials are biodegradable, at least in industrial composting plants. The use of polylactic acid is particularly preferred, since polymers based on polylactic acid are particularly relatively inexpensive and have good mechanical properties. In this regard, the proportion by weight of the biodegradable fibres to the total weight of the second substrate is preferably selected to be at least 90 percent by weight.

A third substrate may be provided, wherein the second substrate is embedded between the first substrate and the third substrate. In this case, the third substrate is formed analogously to the first substrate and contains biodegradable staple fibres. This embodiment results in a particularly dimensionally stable cleaning cloth, wherein the voluminous first substrate and third substrate formed from staple fibres cover the second substrate comprising spunmelt fibres. Such a cloth can be used on both sides and can pick-up a high amount of dust.

Alternatively, the first substrate comprising staple fibres can be covered on both surfaces by a second substrate comprising spunmelt fibres. This embodiment results in a mechanically stable cleaning cloth.

The biodegradable staple fibres may be formed from regenerated fibres and/or natural fibres. Staple fibres formed from natural fibres may comprise, in particular, cotton, kapok, or wool. Fibres formed from regenerated fibres are mostly solvent spun cellulose fibres known as viscose or Lyocell. Viscose or Lyocell or even mixtures of the two can be used. Further staple fibres formed from regenerated fibres are particularly cost-effective and easy to produce in large quantities. In particular, it is also conceivable to use blends of viscose and solvent spun cellulose fibres to produce the staple fibres. Preferably, the first substrate comprises between 30 percent by weight and 70 percent by weight viscose and between 30 percent by weight and 70 percent by weight Lyocell. In this regard, the proportion by weight of the biodegradable fibres to the total weight of the first substrate is preferably selected to be at least 90 percent by weight.

The grammage of the second substrate is preferably between 10 grams per square metre and 25 grams per square metre. Accordingly, the second substrate has a particularly low grammage.

The weight percentage of the fibres of the second substrate is in each case between 15 percent by weight and 35 percent by weight of the total weight of the cleaning cloth.

The cleaning cloth may have a first main side and a second main side, wherein the first main side and/or the second main side are three-dimensionally structured. The three-dimensional structuring improves the cleaning effect and the pick-up capacity for dirt particles.

Some embodiments of the cleaning cloth according to the invention are explained in more detail below with reference to the figures. These show, in each case schematically:
Fig. 1 a two-substrate cleaning cloth in section;
Fig. 2 a three-substrate cleaning cloth in section;
Fig. 3 a three-substrate cleaning cloth in section.

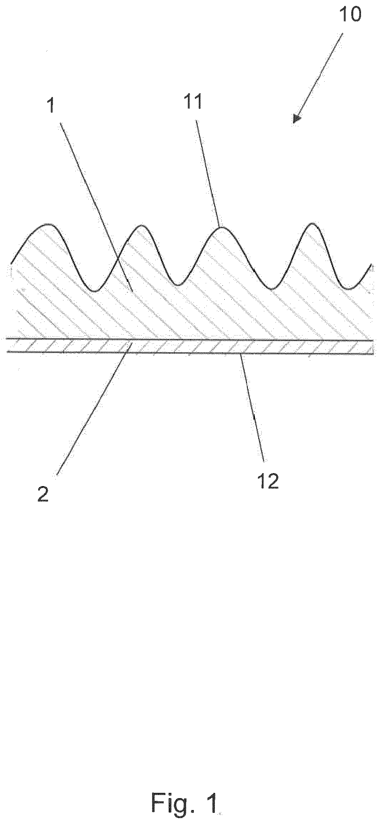

Figure 1 shows a cleaning cloth 10 which is formed from two substrates 1, 2. The cleaning cloth 10 forms a dust cloth and is suited to be attached to the wiping plate of a dust wiping device.

The first substrate 1 of the cleaning cloth 10 is formed from staple fibres and the second substrate 2 is formed from spunmelt fibres. Both the first substrate 1 and the second substrate 2 contain biodegradable fibres. The spunmelt fibres can, in principle, be endless or finite made from melt. In the present embodiment the spunmelt fibres are endless fibres.

To produce the cleaning cloth 10, a second substrate 2 is first produced from a spunbond substrate, wherein the second substrate 2 is thermally bonded. Subsequently, the staple fibres of the first substrate 1 are deposited on the second substrate 2 and bonded by means of hydroentanglement. In doing so, the first substrate 1 is bound within itself on the one hand, and, on the other hand, the first substrate 1 is firmly bonded to the second substrate 2. In addition, the hydroentanglement process causes the cleaning cloth 10 to be structured, so that, in the present embodiment, the main side of the cleaning cloth 10 associated with the first substrate 1 is three-dimensionally structured and forms the cleaning side 11. The second main side associated with the second substrate 2 is flat and forms the attachment side 12 which can be in contact with the wiping plate of a dust cleaning device.

The second substrate 2 contains spunmelt and biodegradable fibres on the basis of polylactic acid (PLA), wherein the weight percentage of the biodegradable fibres in the total weight of the second substrate 2 is 100 percent by weight in the present embodiment.

The staple fibres of the first substrate 1 are formed of regenerated fibres based on a mixture of viscose and solvent spun cellulose fibres (Lyocell) in the present embodiment. The proportion by weight of the viscose fibres and the solvent spun cellulose fibres in the total weight of the first substrate is in each case 50 percent by weight.

The grammage of the second substrate 2 is 17 g/m², and the weight percentage of the fibres of the second substrate 2 is 25 percent by weight of the total weight of the cleaning cloth 10.

The dimensions mentioned above are to be understood with a tolerance of ± 15%.

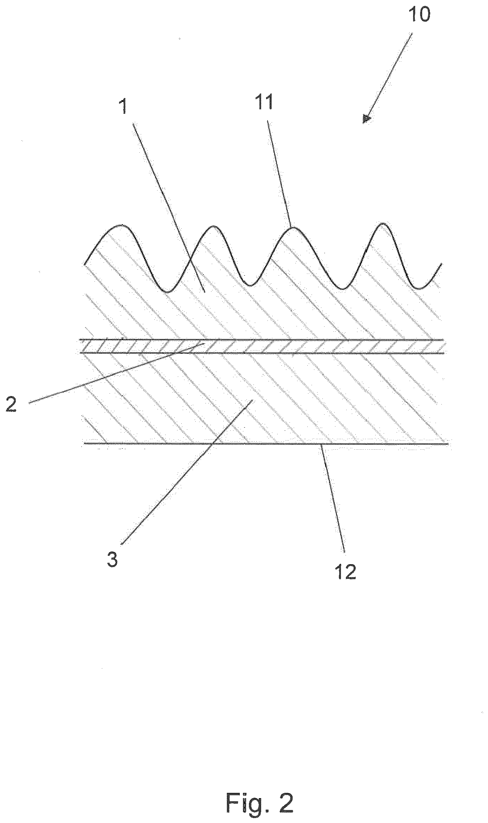

Figure 2 shows a cleaning cloth 10 formed of three substrates 1, 2, 3. The cleaning cloth 10 forms a dust cloth and is adapted to be attached to a wiping plate of a dust wiping device.

The first substrate 1 of the cleaning cloth 10 is formed of staple fibres and the second substrate 2 is formed of spunmelt fibres. A third substrate 3 is provided, which is also formed of staple fibres. The first substrate 1 as well as the second substrate 2 and the third substrate 3 each contain biodegradable fibres. The spunmelt fibres are endless or finite fibres made from melt.

To produce the cleaning cloth 10, a second substrate 2 is first produced from spunmelt fibres, wherein the second substrate 2 is thermally bonded. Subsequently, the staple fibres of the first substrate 1 and the third substrate 3 are deposited on the second substrate 2 so that the second substrate 2 is embedded between the first substrate 1 and the third substrate 3.

Subsequently, the substrates 1, 2, 3 are bonded by means of hydroentanglement. In doing so, the first substrate 1 and third substrate 3 are bound within itself on the one hand, and, on the other hand, the first substrate 1 and third substrate 3 are also firmly bonded to the second substrate 2. In addition, the hydroentanglement process causes the cleaning cloth 10 to be structured, so that in the present embodiment the main side associated with the first substrate 1 is three-dimensionally structured and forms the cleaning side 11. The second main side associated with the third substrate 3 is flat and forms the attachment side 12 which can be in contact with the wiping plate of a dust cleaning device.

The second substrate 2 contains spunmelt and biodegradable fibres of a polylactic acid blend, wherein the proportion by weight of the biodegradable fibres in the total weight of the second substrate 2 is 100 percent by weight, respectively, in the present embodiment.

The staple fibres of the first substrate 1 and third substrate 3 are made of regenerated fibres in the form of solvent spun cellulose fibres based on a mixture of viscose and Lyocell. Here, the proportion of viscose fibres in the total weight of each of the first substrate 1 and third substrate 3 is 50 percent by weight and the proportion of Lyocell is 50 percent by weight.

The grammage of the second substrate 2 is 17 g/m², and the proportion by weight of the fibres of the second substrate 2 is 10 percent by weight of the total weight of the cleaning cloth 10.

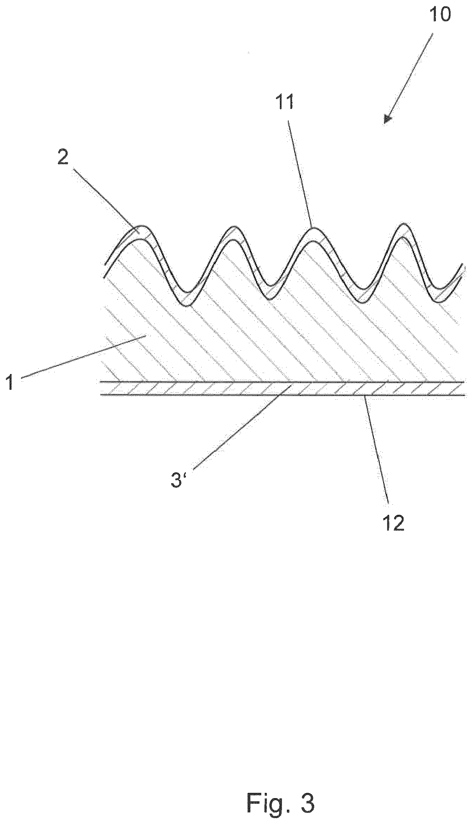

Figure 3 shows a cleaning cloth 10 formed of three substrates 1, 2, 3'. The cleaning cloth 10 forms a dust cloth and is suited to be attached to the wiping plate of a dust wiping device.

The first substrate 1 of the cleaning cloth 10 is formed of staple fibres, and the second substrate 2 is formed of spunmelt fibres. A third substrate 3' is provided, wherein the third substrate 3' is formed of spunmelt fibres. The first substrate 1 and the second substrate 2 and the third substrate 3' each contain biodegradable fibres.

A second substrate 2 and a third substrate 3' of thermally bonded spunmelt substrates are deposited on both sides of the first substrate 1, so that the first substrate 1 is embedded between the second substrate 2 and the third substrate 3'. Subsequently, the nonwoven substrate consisting of three substrates is bonded by means of hydroentanglement. Due to the hydroentanglement, the first substrate 1 is bound within itself and the first substrate 1 is also firmly bonded to the second substrate 2 and the third substrate 3'. In addition, the hydroentanglement process causes the cleaning cloth 10 to be structured, so that in the present embodiment the main side associated with the second substrate 2 is three-dimensionally structured and forms the cleaning side 11. The second main side associated with the third substrate 3' is flat and forms the attachment side 12 which is in contact with the wiping plate of a dust cleaning device.

The second substrate 2 and the third substrate 3' contain spunmelt and biodegradable fibres made of a polylactic acid blend, wherein the weight percentage of the biodegradable fibres in the total weight of each of the second substrate 2 and the third substrate 3' is 100 percent by weight respectively in the present embodiment.

The staple fibres of the first substrate 1 is formed of regenerated fibres based on a mixture of viscose and Lyocell and wool in the present embodiment. The proportion of viscose fibres in the total weight of the first substrate 1 is 45 percent by weight, the proportion of solvent spun cellulose fibres is 45 percent by weight and the proportion of wool is 10 percent.

The grammage of each of the second substrate 2 and the third substrate 3' is 17 g/m², and the proportion by weight of the fibres of the second substrate 2 is 40 percent by weight of the total weight of the cleaning cloth 10.

## Claims

1. A cleaning cloth (10) comprising at least two substrates (1, 2), wherein a first substrate (1) comprises staple fibres and a second substrate (2) comprises spunmelt fibres, wherein the first substrate (1) contains biodegradable fibres, **characterised in that** the second substrate (2) contains biodegradable fibres.

2. Cleaning cloth according to claim 1, **characterised in that** the first substrate (1) is mechanically bonded.

3. Cleaning cloth according to claim 2, **characterised in that** the first substrate (1) and the second substrate (2) are joined together by the mechanical bonding.

4. Cleaning cloth according to claim 3, **characterised in that** the mechanical bonding has been carried out by means of hydroentanglement.

5. Cleaning cloth according to any one of claims 1 to 4, **characterised in that** the second substrate (2) contains spunmelt and biodegradable fibres.

6. Cleaning cloth according to any one of claims 1 to 5, **characterised in that** the proportion by weight of the biodegradable fibres in the total weight of the second substrate (2) is at least 90 percent by weight.

7. Cleaning cloth according to any one of claims 1 to 6, **characterised in that** a third substrate (3) is provided, wherein the third substrate (3) contains a staple fibres and wherein the second substrate (2) is embedded between the first substrate (1) and the third substrate (3).

8. Cleaning cloth according to any one of claims 1 to 6, **characterised in that** a third substrate (3') is provided, wherein the third substrate (3') contains spunmelt fibres and wherein the first substrate (1) is embedded between the second substrate (2) and the third substrate (3').

9. Cleaning cloth according to any one of claims 1 to 8, **characterised in that** the staple fibres are formed from regenerated fibres and/or natural fibres.

10. Cleaning cloth according to claim 9, **characterised in that** the regenerated fibres are formed of viscose and/or Lyocell.

11. Cleaning cloth according to claim 10, **characterised in that** the first substrate (1) contains 30 percent to 70 percent by weight of viscose and 30 percent to 70 percent by weight of Lyocell.

12. Cleaning cloth according to any one of claims 1 to 11, **characterised in that** the grammage of the second substrate (2) and of the third substrate (3) is in each case between 10 g/m² and 25 g/m².

13. Cleaning cloth according to any one of claims 1 to 12, **characterised in that** the proportion by weight of the fibres of the second substrate (2) is between 15 percent and 35 percent by weight of the total weight of the cleaning cloth (10).

14. Cleaning cloth according to any one of claims 1 to 13, **characterised in that** the cleaning cloth (10) has a cleaning side (11) and an attachment side (12), wherein at least the cleaning side (11) is three-dimensionally structured.
